# EUROPEAN PATENT APPLICATION

(11) **EP 3 109 474 A1**
(43) Date of publication of application: **28.12.2016**
(21) Application number: 14855118.7
(22) Date of filing: 16.09.2014
(51) Int. Cl.: F04C 18/02, F04C 29/00

(54) **ELECTRIC SCROLL COMPRESSOR**

(30) Priority: 25.10.2013 JP 2013221734
(71) Applicant: Valeo Japan Co., Ltd., Saitama 360-0193 (JP)
(72) Inventor: DEGUCHI, Hironobu, Kumagaya-shi Saitama 360-0193 (JP)
(74) Representative: Tran, Chi-Hai
(86) International application number: PCT/JP2014/074357
(87) International publication number: WO 2015/060037

(57) **Abstract**

[Task] In an electric scroll compressor which includes a housing member in which a motor fixing portion and an end plate are integrated with each other, and in which a thrust load of a swing scroll is supported by the end plate, deformation of the end plate decreases.

[Solution] In an electric scroll compressor in which stator contact portions 61 which come into contact with a stator 41 of an electric motor 4 and stator non-contact portions 62 which do not come into contact with the stator are alternately disposed in a circumferential direction on an inner circumferential wall of a motor fixing portion 6a, a hole 63 is provided at a position of the end plate 6b corresponding to each of the stator contact portions 61 in an axial direction, and a disadvantage in which the end plate 6b is deformed due to the motor fixing portion 6a being deformed to increase the diameter, is prevented. In addition, a reinforcing rib 65 reinforcing the end plate 6b is provided at a position of the end plate 6b corresponding to each of the stator non-contact portions 62 in the axial direction, and deformation of the stator contact portion 61 influencing the end plate 6b via the reinforcing rib 65 is prevented.

## Description

### Technical Field

The present invention relates to an electric scroll compressor which is used in a refrigeration cycle of a vehicular air conditioner, or the like, and particularly, to an electric scroll compressor, in which a housing member in which an electric motor is accommodated is configured such that a motor fixing portion to which the electric motor is fixed and an end plate which supports an axial load of a swing scroll and rotatably supports a drive shaft are integrally formed.

### Background Art

In the related art, for example, as an electric scroll compressor, a configuration described in PTL 1 below is known. The electric scroll compressor includes a discharge housing which includes a discharge port and in which a compression portion (compression mechanism) configured such that a fixing scroll member and a movable scroll member are disposed so as to face each other is accommodated, a suction housing which includes a suction port, and an intermediate housing which is interposed between the discharge housing and the suction housing and in which an electric motor is accommodated along with the suction housing, in which the intermediate housing is configured so as to include a motor fixing portion in which a portion of the electric motor is accommodated and fixed, and a bearing support portion (end plate) which is integrally formed on the discharge housing side of the motor fixing portion, supports a thrust load of a swing scroll, and supports a drive shaft via a bearing.

### Citation List

### Patent Literature

[PTL1] JP-A-2000-291557

### Summary of Invention

### Technical Problem

In general, since a stator of an electric motor is closely fitted so as to be fixed to a housing member, in which the electric motor is accommodated, using pressure-fitting, shrinkage-fitting, or the like, if a motor fixing portion is deformed such that the diameter of the motor fixing portion increases due to the close-fitting of the motor, an end plate which is integrated with the motor fixing portion is also deformed.

Since the end plate is a member which supports a thrust load of a swing scroll, deformation of the end plate makes management of a thrust gap or contact surface pressure difficult, and there is a disadvantage that the deformation influences the performance or reliability of a compressor. Accordingly, if it is not possible to prevent the deformation of the motor fixing portion due to the close-fitting of the motor, a configuration in which the deformation of the end plate is decreased is required.

The present invention is made in consideration of the above-described circumstances, and a main object thereof is to decrease deformation of an end plate in an electric scroll compressor which includes a housing member in which a motor fixing portion and an end plate are integrated with each other, and a thrust load of a swing scroll is supported by the end plate.

### Solution to Problem

In order to achieve the above-described object, there is provided an electric scroll compressor, including: a housing member; a compression mechanism which is accommodated in the housing member, and in which a fixing scroll having a substrate and a spiral wall and a swing scroll having a substrate and a spiral wall mesh with each other to form a compression chamber; a drive shaft by which the swing scroll is revolved; a rotation preventing mechanism which prevents rotation of the swing scroll; and an electric motor which is accommodated in the housing member and rotates the drive shaft, in which the electric motor includes a rotor which is fixed to the drive shaft and a stator which excites and drives the rotor, in the housing member, a motor fixing portion to which the electric motor is fixed, and an end plate which supports an axial load of the swing scroll and rotatably supports the drive shaft are integrally formed, stator contact portions which come into contact with the stator and stator non-contact portions which do not come into contact with the stator are alternately disposed in a circumferential direction on an inner circumferential wall of the motor fixing portion, and a hole, which is formed at a position corresponding to each of the stator contact portions in an axial direction and penetrates the end plate in the axial direction, is provided on the end plate.

Accordingly, since the hole is formed at the position corresponding to each of the stator contact portions in the axial direction, even when the stator contact portions come into contact with the stator and are deformed to be widened, stress due to deformation is not easily transmitted to the end plate because of the hole. Therefore, it is possible to prevent a disadvantage in which the end plate is deformed due to the motor fixing portion being deformed so as to increase the diameter.

In addition, assuming the above-described configuration, a reinforcing rib reinforcing the end plate may be provided on the end plate at a position corresponding to each of the stator non-contact portions in the axial direction.

In order to increase stiffness of the end plate, providing the reinforcing rib on the end plate is effective. However, if the reinforcing rib is formed at the position corresponding to the stator contact portion in the axial direction, stress due to the deformation of the stator contact portion is directly transmitted to the end plate via the reinforcing rib. Accordingly, by forming the reinforcing rib at the position corresponding to the stator non-contact portion in the axial direction, it is possible to prevent the deformation of the stator contact portion from influencing the end plate via the reinforcing rib.

Herein, the hole may be a long hole which is long in a circumferential direction of the end plate. According to this configuration, the deformation of the motor fixing portion (stator contact portion) is not easily transmitted to the end plate.

In addition, the hole may be a fluid passage through which a fluid to be compressed, which is compressed in the compression chamber, flows. In this way, since the hole is the passage of the fluid to be compressed, it is not necessary to form a hole for preventing deformation in addition to the hole of the fluid passage.

Moreover, in the above-described configuration, in a case in which the rotation preventing mechanism includes a plurality of ring members which are disposed in a circumferential direction and a plurality of pins which engage with the ring members, between the substrate of the swing scroll and the end plate, each of the ring members may be accommodated in a recessed portion formed on the substrate of the swing scroll, and each of the pins may be fixed to the end plate.

According to this configuration, it is possible to fix the pins to the end plate in which deformation is prevented and which has high stiffness, and it is possible to improve the performance and reliability of the compressor by increasing the accuracy during assembly of the pins.

Moreover, a positioning pin which positions the fixing scroll with respect to the end plate may be disposed on the end plate, and the positioning pin may be provided on a virtual circle including the hole.

From the viewpoint of accurately performing the positioning between the end plate and the fixing scroll using the positioning pin, preferably, the pins are provided at locations away from a shaft center if possible. Meanwhile, the influence (deformation) due to the pressure-fitting of the motor with respect to the end plate is decreased on the virtual circle in which the holes are provided or the portion inside the virtual circle. Accordingly, the most suitable disposition location of the positioning pin at which both conditions are satisfied is the location positioned on the virtual circle including the hole, and if the positioning pin is provided at this position, it is possible to prevent tilting of the positioning pin and it is possible to increase positioning accuracy.

### Advantageous Effects of Invention

As described above, according to the present invention, in an electric scroll compressor including a housing member, in which a motor fixing portion to which an electric motor is fixed, and an end plate which supports an axial load of a swing scroll and rotatably supports a drive shaft are integrally formed, and in which stator contact portions which come into contact with a stator and stator non-contact portions which do not come into contact with the stator are alternately disposed in a circumferential direction on an inner circumferential wall of the motor fixing portion, a hole penetrating in an axial direction is provided at a position of the end plate corresponding to each of the stator contact portions in the axial direction. Accordingly, even in a case in which the stator contact portions are deformed, it is possible to decrease deformation of the end plate, and it is possible to prevent a decrease in the performance or reliability of the compressor.

In addition, in a case in which a reinforcing rib reinforcing the end plate is formed on the end plate, since the reinforcing rib is formed at the position corresponding to each of the stator non-contact portions in the axial direction, it is possible to prevent the deformation of the stator contact portion from influencing the end plate via the reinforcing rib.

In addition, assuming the above-described configuration, a rotation preventing mechanism includes a plurality of ring members which are disposed in a circumferential direction and a plurality of pins which engage with the ring members, between a substrate of the swing scroll and the end plate, and each of the ring members is accommodated in a recessed portion formed on the substrate of the swing scroll, and each of the pins is fixed to the end plate. Accordingly, since the pins are fixed to the portions at which deformation is suppressed, the accuracy during assembly of the pins increases and it is possible to improve the performance or reliability of the compressor.

In addition, since a positioning pin which positions the fixing scroll is provided on a virtual circle including the hole of the end plate, it is possible to increase positioning accuracy while preventing tilting of the positioning pin.

### Brief Description of Drawings

Fig. 1 is a section view showing an electric scroll compressor according to the present invention.
Fig. 2A is a rear view of a swing scroll.
Fig. 2B is sectional view of a swing scroll taken along line A-A of Fig. 2A.
Fig. 3A is a view showing a housing member into which an end plate is integrated, when viewed in an axial direction from a motor fixing portion side.
Fig. 3B is a view showing a housing member into which an end plate is integrated, when viewed in the axial direction from a compression mechanism side.
Fig. 4 is a side sectional view showing the housing member into which the end plate is integrated.
Fig. 5 is a partially cut perspective view showing the housing member into which the end plate is integrated. Description of Embodiments

Hereinafter, an electric scroll compressor according to the present invention will be described with reference to the drawings.

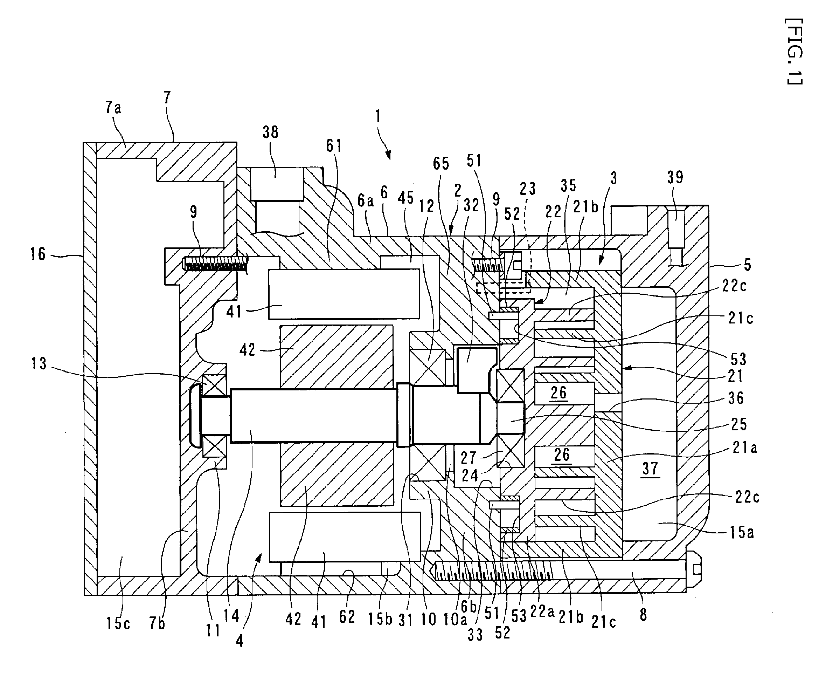

In Fig. 1, an electric scroll compressor 1 is an electric compressor suitable for a refrigeration cycle which has a refrigerant as a working fluid, and in a housing 2 formed of aluminum alloy, a compression mechanism 3 is disposed on the right side of the drawing, and an electric motor 4 which drives the compression mechanism 3 is disposed on the left side of the drawing. In addition, in Fig. 1, the left side of the drawing is referred to as a front side of the compressor 1, and the right side of the drawing is referred to as a rear side of the compressor 1.

The housing 2 includes a compression mechanism accommodation housing member 5 in which the compression mechanism 3 is accommodated, a motor accommodation housing member 6 in which the electric motor 4 driving the compression mechanism 3 is accommodated, and an inverter accommodation housing member 7 in which an inverter device (not shown) which drives and controls the electric motor 4 is accommodated, and the housing members are positioned by positioning pins (not shown) and fastened in an axial direction by fastening bolts 8 and 9.

The compression mechanism accommodation housing member 5 fixes a fixing scroll of the compression mechanism described below, and is formed in a bottomed tubular shape in which a side facing the motor accommodation housing member is opened. In the motor accommodation housing member 6, a tubular motor fixing portion 6a to which the electric motor is fixed, and an end plate 6b are integrally formed with each other, and the end plate 6b is provided on a side facing the compression mechanism accommodation housing member 5 and supports an axial load of a swing scroll 22 of the compression mechanism 3 described below, and a shaft support portion 10 is integrally provided with the end plate 6b. In addition, in the inverter accommodation housing member 7, an inverter accommodation portion 7a, which is formed in a tubular shape, and an end plate 7b in which a shaft support portion 11 is integrally formed on a side facing the motor accommodation housing member 6, are integrally provided.

In addition, a drive shaft 14 is rotatably supported by the shaft support portion 10 of the end plate 6b of the motor accommodation housing member 6 and the shaft support portion 11 of the end plate 7b of the inverter accommodation housing member 7 via bearings 12 and 13. The inner portion of the housing 2 is divided into a compression mechanism accommodation portion 15a in which the compression mechanism 3 is accommodated, a motor accommodation portion 15b in which the electric motor 4 is accommodated, and an inverter accommodation portion 15c in which the inverter device is accommodated, from the rear side by the end plates 6b and 7b which are formed in the motor accommodation housing member 6 and the inverter accommodation housing member 7.

Moreover, in this example, the inverter accommodation portion 15c is defined by fixing a cover 16 to the inverter accommodation housing member 7 using a bolt (not shown) or the like.

The compression mechanism 3 is a scroll type mechanism which includes a fixing scroll 21 and the swing scroll 22 which is disposed so as to face the fixing scroll, movement in the axial direction of the fixing scroll 21 with respect to the housing 2 (compression mechanism accommodation housing member 5) is allowed, and movement in a radial direction of the fixing scroll 21 is regulated by positioning pins 23 described below. The fixing scroll 21 is configured of a disk-shaped substrate 21a, a cylindrical outer circumferential wall 21b which is provided over the entire circumference along the outer edge of the substrate 21a and is erected toward the front side, and a spiral wall 21c having a spiral shape which extends toward the front side from the substrate 21a inside the outer circumferential wall 21b.

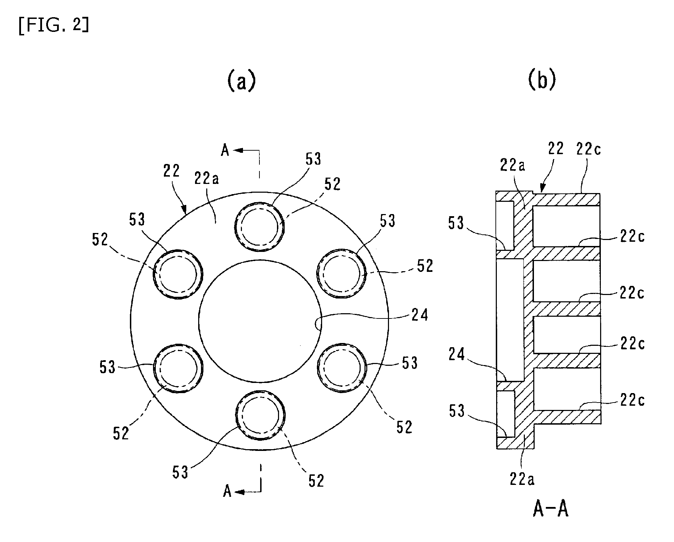

Moreover, also as shown in Fig. 2, the swing scroll 22 is configured of a disk-shaped substrate 22a and a spiral wall 22c having a spiral shape which is erected toward the rear side from the substrate 22a, an eccentric shaft 25, which is provided on the rear end portion of the drive shaft 14 and is eccentrically provided with respect to the shaft center of the drive shaft 14, is supported via a radial bearing 27 by a fitting recessed portion 24 which is provided at the center on the rear surface of the substrate 22a, and the swing scroll 22 is provided so as to revolve about the shaft center of the drive shaft 14.

In the fixing scroll 21 and the swing scroll 22, the spiral walls 21c and 22c mesh with each other, and a compression chamber 26 is defined by a space which is surrounded by the substrate 21a and the spiral wall 21c of the fixing scroll 21 and the substrate 22a and the spiral wall 22c of the swing scroll 22.

Moreover, positions in the radial direction of the fixing scroll 21 and the end plate 6b of the motor accommodation housing member 6 are regulated by the positioning pins 23.

In addition, in this example, the fixing scroll 21 is directly assembled to the end plate 6b of the motor accommodation housing member 6 and the axial load of the swing scroll 22 is directly supported by the end plate 6b. However, an annular thrust race having a thin plate shape may be interposed between the outer circumferential wall 21b of the fixing scroll 21 and the end plate 6b, the fixing scroll 21 and the end plate 6b may be abutted against each other via the thrust race, and the axial load of the swing scroll 22 may be also supported by the end plate via the thrust race.

The shaft support portion 10 which is integrally formed with the end plate 6b of the motor accommodation housing member 6 has a through hole 10a at the center, and in the shaft support portion 10, a bearing accommodation portion 31 in which the bearing 12 is accommodated and a weight accommodation portion 33 in which a balance weight 32 which is rotated so as to be integrated with the drive shaft 14 is accommodated are formed in this order from the front side farthest from the swing scroll 22.

A suction chamber 35, into which a refrigerant introduced from a suction port 38 described below is sucked via a suction passage 45, is formed between the outer circumferential wall 21b of the above-described fixing scroll 21 and the outermost circumferential portion of the spiral wall 22c of the swing scroll 22, and a discharge chamber 37, to which refrigerant gas compressed in the compression chamber 26 is discharged via a discharge hole 36 formed at approximately the center of the fixing scroll 21, is formed between the rear side of the fixing scroll 21 in the housing and the rear end wall of the compression mechanism accommodation housing member 5. The refrigerant gas which is discharged to the discharge chamber 37 is pressure-fed to an external refrigerant circuit via a discharge port 39.

A stator 41 and a rotor 42 configuring the electric motor 4 are accommodated in the motor fixing portion 6a which is formed on the front side of the end plate 6b of the motor accommodation housing member 6. The stator 41 is configured of an iron core which is cylindrically formed and a coil which is wound around the iron core, and is fixed to the inner surface of the housing 2 (motor accommodation housing member 6). In addition, the rotor 42, which is configured of a magnet rotatably accommodated inside the stator 41, is mounted so as to be fixed to the drive shaft 14, and the rotor 42 is rotated by a rotation magnetic force formed by the stator 41 so as to rotate the drive shaft 14.

In addition, the inverter device accommodated in the inverter accommodation housing member 7 is electrically connected to the stator 41 via a terminal (an airtight terminal) attached to a through hole (not shown) formed on the end plate 7b, and power is supplied from the inverter device to the electric motor 4.

The suction port 38, through which the refrigerant gas is sucked to the motor accommodation portion 15b, is formed on the side surface of the housing 2 (motor accommodation housing member 6), and the suction passage 45, through which the refrigerant flowing from the suction port 38 into the motor accommodation portion 15b is introduced to the suction chamber 35, is configured via a gap between the stator 41 and the housing 2 (motor accommodation housing member 6), holes 63 formed on the end plate 6b, a gap formed between the fixing scroll 21 and the housing 2, or the like.

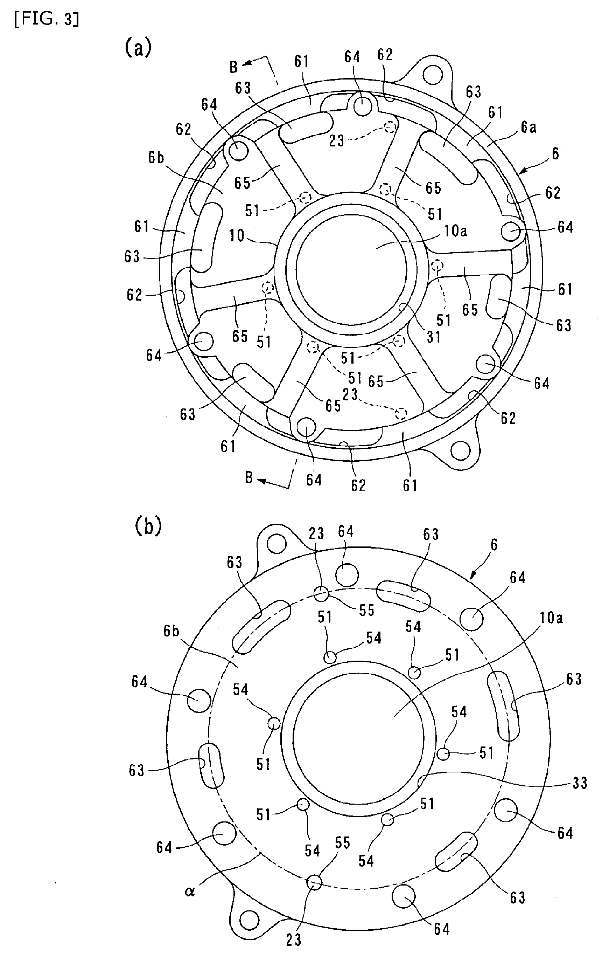

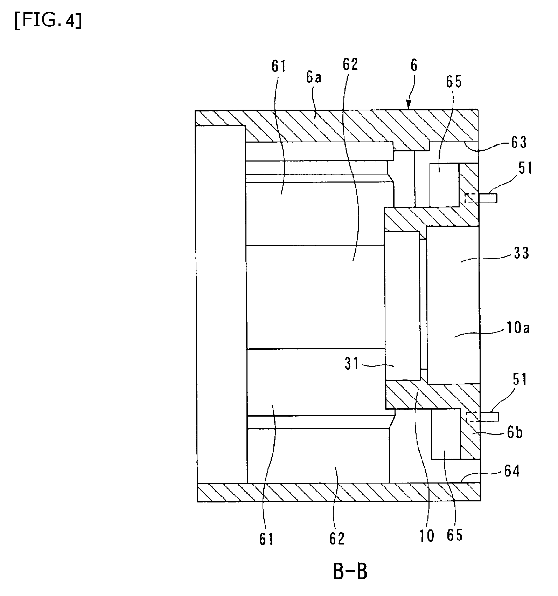

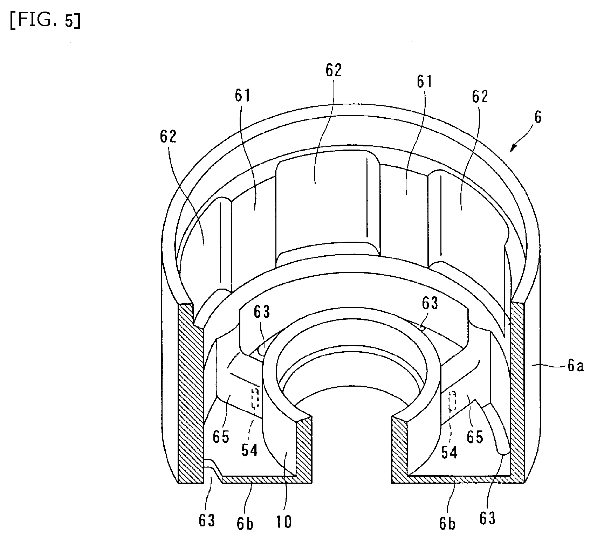

As shown in Figs. 3 to 5, stator contact portions 61 which come into contact with the stator 41 and stator non-contact portions 62 which do not come into contact with the stator are alternately formed on the inner circumferential surface of the motor accommodation housing member 6 in the circumferential direction. The stator contact portions 61 and the stator non-contact portions 62 are formed so as to extend in the axial direction, and the stator 41 is fixed to the housing (motor accommodation housing member 6) by tightly fitting the outer circumferential portion of the stator 41 to the stator contact portions 61 by pressure-fitting, shrinkage-fitting, or the like. Accordingly, the gap between the stator 41 and the housing 2 (motor accommodation housing member 6) configuring a portion of the suction passage 45 is formed by gaps between the inner walls of the stator non-contact portions 62 and the outer circumferential portion of the stator 41.

In this example, six stator non-contact portions 62 and six stator contact portions 61 are formed with intervals of approximately 60° in a center angle in the circumferential direction, and in this example, widths of the stator contact portions 61 in the circumferential direction are relatively smaller than widths of the stator non-contact portions 62 in the circumferential direction (the width of each of the stator contact portions 61 is formed so as to have approximately 20°, and the width of each of the stator non-contact portions 62 is formed so as to have approximately 40° in a circumferential angle).

In addition, the holes 63 which communicate with the motor accommodation portion 15b and the compression mechanism accommodation portion 15a are formed on the end plate 6b of the motor accommodation housing member 6, and the refrigerant flowing from the suction port 38 into the motor accommodation portion 15b is introduced into the suction chamber 35 via the holes 63.

The holes 63 are formed on the outside in the radial direction from pins 51 of the rotation preventing mechanism described below. The plurality of holes 63 are formed in the circumferential direction at positions corresponding to the stator contact portions 61 in the axial direction, that is, positions approximately overlapping with the stator contact portions 61 in the circumferential direction (positions having approximately the same phases), and in this example, the holes 63 are formed in long holes extending in the circumferential direction and are formed at positions (five locations) corresponding to all remaining stator contact portions except for one position corresponding to one stator contact portion.

In addition, reference numeral 64 indicates bolt holes into which the bolts 9 are inserted.

Moreover, in this example, reinforcing ribs 65, which reinforce the end plate 6b from the shaft support portion 10 to the inner circumferential surface of the motor fixing portion 6a, integrally extend in the radial direction on the surface of the motor accommodation portion side of the end plate 6b. The plurality of reinforcing ribs 65 are formed with approximately equal intervals in the circumferential direction at positions corresponding to the stator non-contact portions 62 in the axial direction, that is, positions approximately overlapping with the stator non-contact portions 62 in the circumferential direction (positions having approximately the same phases), and in this example, the reinforcing ribs 65 are provided at six locations in the circumferential direction in accordance with the number of the pins 51 described below. Accordingly, the reinforcing ribs 65 are formed so as not to overlap the positions of the stator contact portions 61 in the circumferential direction (so as not to have the same phase), and stress due to deformation of the stator contact portions 61 is not directly transmitted to the reinforcing ribs 65.

In addition, as shown in Fig. 3 (b), the positioning pins 23 which position the fixing scroll 21 with respect to the end plate 6b are provided on a virtual circle α including the holes 63, and the positioning pins 23 are pressure-fitted to pin attachment holes 55 formed on the end plate 6b so as to be fixed to the end plate 6b.

In the above-described configuration, when the rotor 42 rotates and the drive shaft 14 rotates, in the compression mechanism 3, the swing scroll 22 is driven via the eccentric shaft 25 so as to revolve.

Accordingly, the refrigerant, which is sucked from the suction port 38 to the motor accommodation portion 15b, is introduced into the suction chamber 35 via the holes 63 of the end plate 6b through the gaps between the stator non-contact portions 62 and the stator 41 around the rotor or the gap between the coils of the stator 41.

Since the compression chamber 26 of the compression mechanism moves while the volume of the compression chamber 26 is gradually decreased from the outer circumferential sides of the spiral walls 21c and 22c of both scrolls to the center sides by the revolution of the swing scroll 22, the refrigerant gas sucked from the suction chamber 35 to the compression chamber 26 is compressed, and the compressed refrigerant gas is discharged to the discharge chamber 37 via the discharge hole 36 formed on the substrate 21a of the fixing scroll 21 and is sent to the external refrigerant circuit via the discharge port 39.

However, in the above-described electric scroll compressor 1, since a rotation force is generated in the swing scroll 22 due to the rotation of the drive shaft 14, it is necessary to revolve the swing scroll 22 around the shaft center of the drive shaft 14 while regulating the rotation of the swing scroll 22. Accordingly, in the present compressor, the rotation preventing mechanism in which the pins 51 are engaged is provided between the substrate 22a of the swing scroll 22 and the end plate 6b of the motor accommodation housing member 6.

In this example, for example, the rotation preventing mechanism, in which the pins 51 are engaged, adopts a pin and ring coupling, and is configured of the plurality of pins 51 which are disposed in the circumferential direction, a plurality of ring members 52 which engage with the pins 51, and a plurality of cylindrical recessed portions 53 in which the ring members 52 are accommodated.

As shown in Figs. 1 and 2, the cylindrical recessed portions 53 are configured so as to form recesses having circular cross-sections on the rear surface of the substrate 22a of the swing scroll 22, and are formed with equal intervals (in this example, an interval of 60°) around the fitting recessed portion 24 of the swing scroll 22. Each of the ring members 52 is formed of iron and has a ring shape, and has a smaller outer diameter than an inner diameter of each of the cylindrical recessed portions 53 so as to be loosely fitted to the cylindrical recessed portion 53. A thickness of the ring member 52 in the axial direction is substantially the same as a width of the cylindrical recessed portion 53 in the axial direction, or is smaller than the width of the cylindrical recessed portion 53.

Each of the pins 51 is formed of iron and has a columnar shape, and is formed so as to have a smaller outer diameter than the inner diameter of the ring member 52. The pins 51 are fixed with equal intervals around the weight accommodation portion 33 of the end plate 6b of the motor accommodation housing member 6 in accordance with the positions of the cylindrical recessed portions 53. In this example, the pins 51 are pressure-fitted to pin attachment holes 54 formed on the end plate 6b so as to be fixed to the end plate 6b, and are fixed to the rear surface of the portions on which the reinforcing ribs 65 of the end plate 6b are formed.

Accordingly, even when the rotation force is generated in the swing scroll 22 due to the rotation of the drive shaft 14, the pins 51 fixed to the end plate 6b come into contact with the inner circumferential surfaces of the ring members 52, the pins 51 engage with the cylindrical recessed portions 53 via the ring members, and the movement of the swing scroll is regulated. Therefore, in the swing scroll 22, only the revolution of the swing scroll 22 with respect to the shaft center of the drive shaft 14 is admitted while the rotation of the swing scroll 22 is regulated.

In addition, in the above-described configuration in which the pin and ring coupling is used as the rotation preventing mechanism, since the cylindrical recessed portions are formed on the substrate of the swing scroll, it is possible to decrease weight of the swing scroll 22 which is a movable member, and it is possible to improve drivability of the swing scroll 22. In addition, since the pins 51 are pressure-fitted and fixed to the end plate 6b of the motor accommodation housing member 6 which is a fixing member having higher stiffness than that of the substrate 22a of the swing scroll 22, deformation of the end plate 6b is little generated during pressure-fitting of the pins 51. Moreover, even in the case in which the pins 51 engage with the cylindrical recessed portions 53 via the ring members 52 and receive the radial load, the locations of the cylindrical recessed portions 53 to which the pins 51 are pressure-fitted are not deformed by the radial load, and it is possible to increase accuracy during assembly of the pins 51 (it is possible to prevent tilting of the pins).

In addition, in the above-described configuration, since the holes 63 are formed on the outside in the radial direction from the locations of the pins 51 fixed to the end plate 6b, even in a case where the motor fixing portion 6a is pressed and widened when the stator 41 of the electric motor is tightly fitted to the motor fixing portion 6a (the stator contact portions 61) of the motor accommodation housing member 6, deformation of the end plate 6b is prevented by the holes 63, and it is possible to prevent deformation at the locations of the fixed pins 51. Particularly, in the present embodiment, in the case where the holes 63 formed on the end plate 6b are formed in the long holes extending in the circumferential direction and are formed at the positions corresponding to the stator contact portions 61 in the axial direction, it is possible to reliably prevent transmission of stress from the stator contact portions 61, at which deformation of the motor fixing portion 6a is most significantly generated, by the holes, and it is possible to more effectively prevent deformation of the end plate 6b (deformation at the locations of the fixed pins).

Moreover, in the above-described configuration, since the pins 51 are fixed to the portions at which the reinforcing ribs 65 provided on the end plate 6b are formed, the pins 51 are fixed to the locations having higher stiffness in the end plate 6b, and it is more reliably prevent the deformation at the locations to which the pins 51 are pressure-fitted when the pins 51 are pressure-fitted so as to be fixed or when the pins 51 receive the radial load.

Moreover, since the reinforcing ribs 65 are formed at the positions corresponding to the stator non-contact portions 62 in the axial direction, it is possible to prevent the stress due to the deformation of the stator contact portions 61 from being transmitted to the end plate 6b via the reinforcing ribs 65.

Moreover, in the above-described configuration, since the positioning pins 23 which position the end plate 6b and the fixing scroll 21 are provided on the virtual circle including the holes 63, it is possible to satisfy a demand of providing the positioning pins 23 at locations away from the shaft center if possible to secure positioning accuracy between the end plate 6b and the fixing scroll 21, and a demand of suppressing influences (deformation) of the end plate 6b due to the pressure-fitting (tightly fitting) of the electric motor 4 with respect to the motor accommodation housing member 6, and it is possible to secure accuracy during assembly of the positioning pins 23 while securing positioning accuracy of the fixing scroll 21.

Moreover, in the above-described configuration example, the example is exemplified in which the cylindrical recessed portions 53 engage with the pins 51 via the ring members 52. However, in order to secure a rotation prevention function, it is also possible to omit the ring member 52, and in this case, the cylindrical recessed portions 53 may directly engage with the pins 52. Also in this configuration, effects similar to those of the above-described configuration example can be obtained.

### Reference Signs List

1: electric scroll compressor
2: housing
3: compression mechanism
4: electric motor
6: motor accommodation housing member
6a: motor fixing portion
6b: end plate
14: drive shaft
21: fixing scroll
21a: substrate
21c: spiral wall
22: swing scroll
22a: substrate
22c: spiral wall
23: positioning pin
26: compression chamber
51: pin
52: ring member
53: cylindrical recessed portion
61: stator contact portion
62: stator non-contact portion
63: hole
65: reinforcing rib

## Claims

1. An electric scroll compressor (1), comprising:
a housing member (5, 6, 7);
a compression mechanism (3) which is accommodated in the housing member (5, 6, 7), and in which a fixing scroll (21) having a substrate (21a) and a spiral wall (21c) and a swing scroll (22) having a substrate (22a) and a spiral wall (22c) mesh with each other to form a compression chamber (26);
a drive shaft (14) by which the swing scroll (22) is revolved;
a rotation preventing mechanism which prevents rotation of the swing scroll (22); and
an electric motor (4) which is accommodated in the housing member (5, 6, 7) and rotates the drive shaft (14),
wherein the electric motor (4) includes a rotor (42) which is fixed to the drive shaft (14) and a stator (41) which excites and drives the rotor (42),
wherein in the housing member (5, 6, 7), a motor fixing portion (6a) to which the electric motor (4) is fixed, and an end plate (6b) which supports an axial load of the swing scroll (22) and rotatably supports the drive shaft (14) are integrally formed,
wherein stator contact portions (61) which come into contact with the stator (41) and stator non-contact portions (62) which do not come into contact with the stator (41) are alternately disposed in a circumferential direction on an inner circumferential wall of the motor fixing portion (6a), and
wherein a hole (63), which is formed on a position corresponding to each of the stator contact portions (61) in an axial direction and penetrates the end plate (6b) in the axial direction, is provided on the end plate (6b).

2. The electric scroll compressor (1) according to claim 1,
wherein a reinforcing rib (65), which is formed on a position corresponding to each of the stator non-contact portions (62) in the axial direction and reinforces the end plate (6b), is provided on the end plate (6b).

3. The electric scroll compressor (1) according to claim 1 or 2,
wherein the hole (63) is a long hole which is long in a circumferential direction of the end plate (6b).

4. The electric scroll compressor (1) according to any one of claims 1 to 3,
wherein the hole (63) is a fluid passage through which a fluid to be compressed, which is compressed in the compression chamber (26), flows.

5. The electric scroll compressor (1) according to any one of claims 1 to 4,
wherein the rotation preventing mechanism includes a plurality of ring members (52) which are disposed in a circumferential direction and a plurality of pins (51) which engage with the ring members (52), between the substrate (22a) of the swing scroll (22) and the end plate (6b), and
wherein each of the ring members (52) is accommodated in a recessed portion (53) formed on the substrate (22a) of the swing scroll (22), and each of the pins (51) is fixed to the end plate (6b).
[Claim 6]
The electric scroll compressor (1) according to any one of claims 1 to 5,
wherein a positioning pin (23) which positions the fixing scroll (21) with respect to the end plate (6b) is disposed on the end plate (6b), and the positioning pin (23) is provided on a virtual circle (α) including the hole (63).
